# EUROPÄISCHE PATENTSCHRIFT

(11) **EP 3 298 886 B1**
(45) Veröffentlichungstag und Bekanntmachung des Hinweises auf die Patenterteilung: **23.10.2019**
(21) Anmeldenummer: 16190001.4
(22) Anmeldetag: 21.09.2016
(51) Int. Cl.: A01K 1/02, A01K 5/01, A01K 5/02

(54) **FUTTERTROG FÜR SAUEN UND DEREN FERKEL, ABFERKELBUCHT UND VERFAHREN ZUR FÜTTERUNG VON FERKELN UND/ODER SAUEN**
FEED TROUGH FOR SOWS AND THEIR PIGLETS, FARROWING PEN AND METHOD FOR FEEDING PIGLETS AND / OR SOWS
MANGEOIRE POUR TRUIES ET LEURS PORCELETS, CASE DE MISE-BAS ET PROCÉDÉ D'ALIMENTATION DE PORCELETS ET/OU DE TRUIES

(43) Veröffentlichungstag der Anmeldung: 28.03.2018
(73) Patentinhaber: Hölscher & Leuschner GmbH & Co., 48488 Emsbüren (DE)
(72) Erfinder: Hölscher, Richard, 48488 Emsbüren (DE); Geirnaert, Luc, 9170 Sint-Gillis-Waas (BE)
(74) Vertreter: Wischmeyer, André

(56) Entgegenhaltungen:
- DE-A1- 2 738 765
- DE-A1- 19 828 195
- KR-B1- 101 495 068
- KR-Y1- 200 192 019
- NL-C- 2 010 862

## Beschreibung

Die vorliegende Erfindung betrifft ein Verfahren zur Fütterung von Ferkeln und/oder Sauen in einer Abferkelbucht. Des Weiteren betrifft die Erfindung einen Futtertrog zu Durchführung des Verfahrens sowie eine Abferkelbucht mit einem entsprechenden Futtertrog. Der Futtertrog für Sauen und deren Ferkel umfasst zumindest einen als Ferkelfressbereich und zumindest einen als Sauenfressbereich ausgebildeten Teil, wobei die beiden Teile über einen insbesondere als Schweller ausgebildeten Übergangsbereich, dessen Boden unterhalb eines oberen Randes des Futtertroges angeordnet ist, dergestalt miteinander verbunden sind, dass aus einer Zuführung in den Ferkelfressbereich eingebrachtes Futter in den Sauenfressbereich gelangen kann.

Die stark gestiegenen Wurfgrößen heutiger Schweine-Genetiken bedingen eine Milchleistung, die von Sauen oftmals nur unzureichend über das aufgenommene Futter ausgeglichen werden kann. Folglich ist es derzeit die größte Herausforderung, die Futteraufnahme der hochleistenden, laktierenden Sauen zu maximieren, um kritische Körpermassen- und Körperfett-Verluste zu vermeiden. Parallel zur Versorgung der Sau sollen die Ferkel bereits während der Säugephase in der Abferkelbucht angefüttert werden. Hierfür wurde in der NL 2 010 862 ein zweiteiliger Futtertrog vorgeschlagen, der zumindest einen als Ferkelfressbereich und zumindest einen als Sauenfressbereich ausgebildeten Teil aufweist, wobei die beiden Teile über einen insbesondere als Schweller ausgebildeten Übergangsbereich, dessen Boden unterhalb eines oberen Randes des Futtertroges angeordnet ist, dergestalt miteinander verbunden sind, dass aus einer Zufuhr in den Ferkelfressbereich eingebrachtes Futter in den Sauenfressbereich gelangen kann.

KR 101 495 068 B1 zeigt einen Futtertrog mit auf zwei Seiten des Futtertrogs angeordneten Fressbereichen, die aus einem gemeinsamen Hopper mit Futter befüllt werden.

KR 200 192 019 Y1 zeigt einen Kombination aus Futtertrog und Tränke, bei an einen zentralen Fressbereich beidseitig Tränkebereiche angeordnet sind. Die Bereiche sind hierbei so ausgestaltet, dass eine jeweilige Verunreinigung des Futters mit Wasser bzw. des Wassers mit Futter vermieden werden soll.

DE 198 28 195 A1 zeigt einen Fütterungsautomat für die Jungtieraufzucht und/oder Schweinemast. Der Fütterungsautomat ist zur Realisierung sowohl einer Intervallfütterung als auch einer Sattfütterung eingerichtet und weist hierzu eine in oder am Futtertrog angeordnete Sensoreinrichtung auf.

DE 27 38 765 A1 zeigt einen Ferkelschutzkäfig für eine Abferkelbucht.

Nachteilig an einem Ferkeltrog gemäß NL 2 010 862 ist, dass er nicht zur ad libitum-Fütterung ausgebildet ist. Die Sauen können somit unterversorgt werden. Gleichzeitig ist eine vergleichsweise aufwendige Reinigung des Ferkelfressbereichs durch Reinigungsflüssigkeiten wie Luft oder Wasser notwendig.

Es ist Aufgabe der vorliegenden Erfindung, ein Verfahren und eine Vorrichtung zu schaffen, welches die vorbeschriebenen Nachteile vermeidet und sowohl für die in einer Abferkelbucht befindlichen Sauen wie auch deren Ferkel eine optimale Fütterung beziehungsweise Anfütterung erlaubt.

Die Aufgabe wird gelöst durch ein Verfahren gemäß Anspruch 1, durch einen Gegenstand gemäß Anspruch 4 sowie durch ein einen Gegenstand gemäß Anspruch 9. Vorteilhafte Ausgestaltungen der Erfindung sind den auf diese Ansprüche rückbezogenen Unteransprüchen sowie der nachfolgenden Beschreibung zu entnehmen.

Bei dem erfindungsgemäßes Verfahren erfolgt während der Säugephase, insbesondere während der gesamten Dauer der Säugephase, eine Befüllung des Futtertroges vorzugsweise ausschließlich aufgrund eines Signals zumindest eines im Sauenfressbereich angeordneten Sensors und zwar vorzugsweise dergestalt, dass für die Sau eine ad libitum-Fütterung realisiert wird. Weiterhin wird über die Zuführung des Futters in den Ferkelfressbereich etwaig noch im Ferkelfressbereich vorhandenes Futter aus einer vorherigen Zuführphase aus diesem Bereich ausgeschwemmt und in den Sauenfressbereich überführt. Dies gilt insbesondere für eine Flüssigfütterung. Nach dem Entfernen der Sau aus der Abferkelbucht erfolgt die Befüllung des Futtertrogs aufgrund eines Signals zumindest eines im Ferkelfressbereich angeordneten Sensors.

Zur Befüllung des Futtertroges aufgrund eines Signals aus entweder dem Sauenfressbereich oder dem Ferkelfressbereich wird eine vorgegebene Menge Futter eindosiert bzw. zugeführt, wobei insbesondere die Befüllung des Futtertroges aufgrund des Signals des im Ferkelfressbereich vorhandenen Sensors mit einer vorgegebenen Menge Futter dergestalt erfolgt, dass kein neues Futter in den Sauenfressbereich überführt wird. Zur Verfügungstellung eines möglichst frischen Futters kann dann entsprechend häufiger auch eine geringere Futtermenge zugeführt werden.

Erfindungsgemäß weist ein Futtertrog sowohl im Sauenfressbereich als auch im Ferkelfressbereich jeweils zumindest einen Sensor zur Füllstanderkennung auf, der dem jeweiligen Bereich zumindest zugeordnet und insbesondere in diesem angeordnet ist. Durch eine solche erfindungsgemäße Vorrichtung wird ein Futtertrog geschaffen, der sowohl eine Fütterung der Sau wie auch der Ferkel gezielter als im Stand der Technik ermöglicht. Mittels des erfindungsgemäßen Futtertroges kann sowohl die spezielle Ernährungssituation der Sauen als auch der Ferkel berücksichtigt werden. Insbesondere bei Sauen, die bis zu 20 Ferkel pro Wurf legen, kann es zum Ende der Säugephase hin zu einem deutlich stärkeren Zufütterbedarf der Ferkel kommen. Insofern ist die Möglichkeit geschaffen, separat und unabhängig von einer Fütterung der Sau auf ein entsprechendes, beispielsweise Leerstandsignal des Ferkelfressbereichs eine vordefinierte Portion Futter durch die Zuführung zur Verfügung zu stellen. Durch die Möglichkeit für Ferkel und Sau gleichzeitig und eng nebeneinander Futter aufzunehmen, werden die Ferkel verbessert angefüttert.

Bei Füllstandsensoren, die nicht nur einen Leerstand sondern auch eine Höhe des Füllstands messen können, kann die Zuführung auch in Abhängigkeit des Sensorsignals vorgenommen werden. Bei den in der Regel verwendeten Leitungssystemen ist allerdings eine über eine zugehörige Programmierung bzw. Software, die eine Fütterungsanlage steuern kann, vorgebbare Portionierung vorteilhaft.

Die Zuführleitung ist so angeordnet, dass das zugeführte Futter automatisch in Richtung des oder der Übergangsbereiche verdrängt wird. Dies kann beispielsweise durch eine leichte, zum Übergangsbereich hin führende, kontinuierliche Erhöhung des Bodens des Ferkelfressbereichs nach Art einer Rampe realisiert werden. Weiterhin ist es hierfür vorteilhaft, die Zuführung des Futters bei einem erfindungsgemäßen Futtertrog mit nur einem angrenzenden Sauenfressbereich an dem dem Sauenfressbereich entgegengesetzten Ende des Ferkelfressbereichs vorzunehmen.

Vorteilhafterweise ist der Ferkelfressbereich kanalartig und somit längsgestreckt ausgebildet dergestalt, dass die Länge des Ferkelfressbereiches betrachtet in Richtung des Sauenfressbereiches größer ist als die Erstreckung quer zu dieser Längserstreckung. Insbesondere ist der Ferkelfressbereich mindestens doppelt so lang wie breit und vorzugsweise nicht breiter (betrachtet in Richtung der Längserstreckung) als 60 % der Breite des Sauenfressbereiches. Durch die kanalartige Form wird eine sehr gute Ausschwemmung des vorhandenen Futters realisiert und gleichzeitig die Futteraufnahme für die frischgeworfenen Ferkel erleichtert. Darüber hinaus ermöglicht die Längserstreckung die gleichzeitige Anfütterung mehrerer Ferkel, die dicht aneinander stehend eine vertrautere Fütterungssituation vorfinden. Insbesondere weist der Ferkelfressbereich daher eine Länge von mindestens 50 cm auf, um zumindest drei Ferkel gleichzeitig fressen zu lassen.

Zur Befüllung des Futtertroges aufgrund eines Signals aus entweder dem Sauenfressbereich oder dem Ferkelfressbereich wird eine vorgegebene Menge Futter eindosiert bzw. zugeführt, wobei insbesondere die Befüllung des Futtertroges aufgrund des Signals des im Ferkelfressbereich vorhandenen Sensors mit einer vorgegebenen Menge Futter dergestalt erfolgt, dass kein neues Futter in den Sauenfressbereich überführt wird. Die Menge des in dem Ferkelfressbereich eingeführten Futters kann dann maximal dem Volumen des Ferkelbereichs unterhalb einer Oberkante des Übergangsbereiches entsprechen. Zur Verfügungstellung eines möglichst frischen Futters kann dann entsprechend häufiger auch eine geringere Futtermenge zugeführt werden. Erst bei gewünschter zusätzlicher Befüllung auch des Sauenfressbereiches kann dieses Volumen dann vergrößert werden.

In einer zugehörigen, mit den Sensoren drahtgebunden oder drahtlos verbunden Schaltung und/oder einem Programm einer zugehörigen EDV-Einheit, die entsprechend mit den Sensoren verbunden ist, kann eine Umschaltung zwischen den jeweiligen Sensoren des Sauenfressbereiches und des Ferkelfressbereiches vorgenommen werden, so dass die Zuführung von Futter unterschiedlich getriggert werden kann. Die Umschaltung kann auch automatisiert vorgenommen werden, beispielsweise in Abhängigkeit einer Erkennung, ob sich eine Sau in der Abferkelbucht befindet. Hierfür können Identifikationsmittel wie beispielsweise RFID-Tags verwendet werden. Die im Futtertrog angeordneten Sensoren können dann auch so verschaltet werden, dass nach Ablauf einer vorgegebenen Zeitdauer, beispielsweise zwei Wochen nach Entfernen der Sau aus der Abferkelbucht zunehmend auch eine Befüllung des Sauenfressbereiches über das Durchleiten von Material aus dem Ferkelfressbereich in den Sauenfressbereich vorgenommen wird, wobei die vorgegebene Menge kontinuierlich bis zu einer Maximalmenge gesteigert werden kann, um das Anwachsen der Ferkel zu berücksichtigen.

Ebenfalls kann in dem Programm hinterlegt sein, dass beim Ändern der Futtermenge ggf. zunehmend ein anderes Futter verwendet wird, welches die für ein optimales Ferkelwachstum unterschiedlichen Gehalte an Inhaltsstoffen im Futter berücksichtigt.

Weiterhin ist es von Vorteil, einen Regelkreis auszubilden, durch den beispielsweise die in den Ferkelfressbereich nach dem Entfernen der Sau aus der Abferkelbucht eingeführte Futtermenge sich in Abhängigkeit der Zeit bis zum nächsten Leerstandsignal ändert. Je schneller der Ferkelfressbereich wieder geleert ist, desto größer kann die Menge des zugeführten Futters in den Ferkelfressbereich vorgegeben werden hin zur maximalen Füllung des Ferkelfressbereiches. In der zugehörigen Programmierung können solche Werte beispielsweise in Funktionen oder Tabellen hinterlegt sein.

Alternativ zur Erkennung eines Leerstands, d.h. eines leeren Futtertrogbereiches, können die Sensoren auch zur Erkennung eines nicht nur minimalen Füllstandes, sondern auch eines beliebigen Füllstandes ausgebildet sein. Hierfür sind dann über die Höhe der seitlichen Begrenzung der jeweiligen Fressbereiche Sensoren anzuordnen.

Für die Anordnung mehrerer Abferkelbuchten nebeneinander ist es von Vorteil, einen Futtertrog so auszugestalten, dass zumindest zwei jeweils endseitig an einen zentralen Ferkelfressbereich angrenzende Sauenfressbereiche vorhanden sind, die jeweils über einen Übergangsbereich mit dem Ferkelfressbereich verbunden sind. So kann ein zentraler Ferkelfressbereich für zwei aneinandergrenzende Buchten und deren jeweilige Ferkelfressbereiche ausgebildet werden.

Bei einer weiteren Ausbildung der Erfindung zeichnet sich der Futtertrog dadurch aus, dass der entlang einer Längsmittelachse in der Draufsicht insbesondere spiegelsymmetrisch ausgebildete Futtertrog durch eine Viertelung bzw. Vierteilung in je vier Sauen- und je vier Ferkelfressteilbereiche unterteilbar ist, die insbesondere über die zentrale Zuführung in den Ferkelfressbereich versorgbar sind. Die Vierteilung erfolgt insbesondere durch zwei in der Draufsicht senkrecht aufeinander stehende Schnitte. Entsprechend ist in den jeweiligen vier Teilbereichen dann zumindest ein Sensor angeordnet. Es versteht sich, dass diese Teilbereiche jeweils mit einer eigenen Zuführung versehen werden können.

Um gerade bei einem Futtertrog, der für eine Mehrzahl von Abferkelbuchten ausgebildet ist, die Bedienung der Sensorik zu vereinfachen, kann der insbesondere aus Polymer ausgebildete Futtertrog eine über zumindest ein Kabel entfernt von dem Rest des Futtertroges anordnungsfähige Sensorschaltung verfügen. Diese weist dann wenigstens eine Schnittstelle für die Anbindung an einen PC auf. So können beispielsweise bei einer einfachen Leitfähigkeitssensorik die einzelnen zu den Sensoren hinführenden Kabel zu einem mehradrigen Kabel zusammengefasst werden, welches dann in eine Schaltung führt, die mit einer EDV-Einheit verknüpft werden kann.

Die eingangs gestellte Aufgabe wird ebenfalls durch eine Abferkelbucht mit einem vor- oder nachbeschriebenen Futtertrog gelöst, wobei die Abferkelbucht durch eine Absperrung in einen Sauenbereich und einen Ferkelbereich getrennt ist und wobei der Futtertrog sich in beiden Bereichen befindet. Entsprechend ist der Ferkelfressbereich dann dem Ferkelbereich zugeordnet, während der Sauenfressbereich dem Sauenbereich zugeordnet ist. Ferkel können somit gefahrlos im Ferkelfressbereich und motiviert durch die Futtergeräusche der Sau angefüttert werden. Insbesondere ist die Absperrung im Bereich des Übergangsbereiches dergestalt ausgebildet, dass sie an den Futtertrog heranragt und oder diesen oberhalb des Übergangsbereiches überspannt, um eine eindeutige Trennung zwischen den beiden Bereichen vorzunehmen und zu verhindern, dass die Schnauze der Sau zu weit in den Ferkelfressbereich hineinragt.

Weitere Vorteile und Einzelheiten der Erfindung lassen sich der nachfolgenden Figurenbeschreibung entnehmen. In den Abbildungen zeigt schematisch dargestellt:
- Fig. 1:: eine Draufsicht auf einen erfindungsgemäßen Gegenstand,
- Fig. 2:: den Gegenstand nach Figur 1 in einer Schnittdarstellung gemäß A-A nach Figur 1,
- Fig. 3:: den Gegenstand nach Figur 1 in einer Schnittdarstellung gemäß B-B, Figur 4a bis 4d weitere Ausführungsbeispiele eines erfindungsgemäßen Gegenstandes,
- Fig. 5:: eine Draufsicht auf einen weiteren erfindungsgemäßen Gegenstand.

Einzelne Merkmale der nachfolgend beschriebenen Ausführungsbeispiele können mit den Merkmalen der unabhängigen Ansprüche erfindungsgemäße Weiterbildungen darstellen. Sofern dienlich sind gleichwirkende Elemente mit identischen Bezugsziffern versehen.

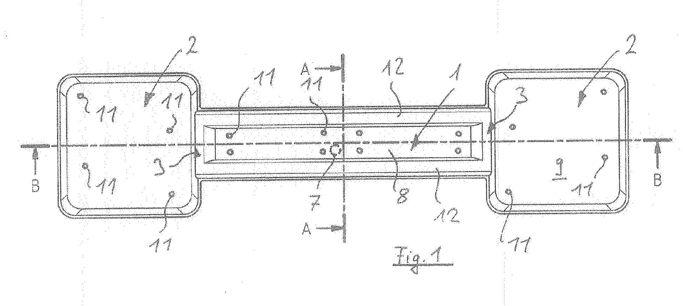

Ein erfindungsgemäßer Futtertrog weist gemäß Fig. 1 einen Ferkelfressbereich 1 und zwei Sauenfressbereiche 2 auf. Die Sauenfressbereiche 2 sind über Übergangsbereiche 3, deren Böden 4 unterhalb eines oberen Randes 6 des Futtertroges angeordnet sind, dergestalt mit dem Ferkelfressbereich 1 verbunden, dass aus einer Zuführung 7 (gestrichelt gezeichnet) in den Ferkelfressbereich 1 eingebrachtes Futter in die Sauenfressbereiche 2 gelangen kann. Sowohl den Sauenfressbereichen 2 als auch dem Ferkelfressbereich 1 sind jeweils Sensoren 11 zugeordnet, die in den Böden 8 und 9 angeordnet sind und die vorliegend einen Leerstand des jeweiligen Futtertrogbereiches erkennen können. Beispielhaft handelt es sich hierbei um Leitfähigkeitssensoren. Durch einen Leerstand des jeweiligen Futtertrogbereiches kommt es hierbei im zugehörigen Messkreis zu einem Spannungsabfall, was dann als Signal für einen Leerstand des jeweiligen Futtertrogbereiches erkannt wird.

Durch die angesprochene Viertelung ist der bezüglich der Schnitt-Ebene A-A spiegelsymmetrisch ausgebildete Futtertrog in je vier Sauen- und je vier Ferkelfressteilbereiche unterteilbar, wobei sämtliche Bereiche über die zentrale Zuführung 7 in den zentralen Ferkelfressbereich versorgt werden. Die in die Abbildung eingebrachten Schnittlinien A-A und B-B beschreiben den Verlauf der Absperrgitter bzw. -wände der Abferkelbuchten, in die dieser Futtertrog eingesetzt werden kann. Die Wände reichen ggf. bis auf den Boden des Futtertroges.

An den Sensoren, bei denen es sich im einfachsten Fall um einfache leitfähige Elemente handeln kann, sind jeweils Kabel angeschlossen (nicht dargestellt), die zu einer über zumindest ein mehradriges Kabel entfernt von dem Rest des Futtertroges angeordneten Sensorschaltung führen. Dort oder in einer verbundenen EDV-Anlage kann die Unterbrechung der Signale durch das Trockenfallen des Futtertroges beziehungsweise des Futtertrogbereiches detektiert werden.

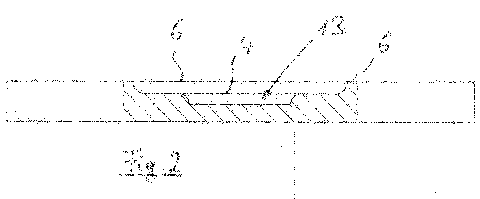

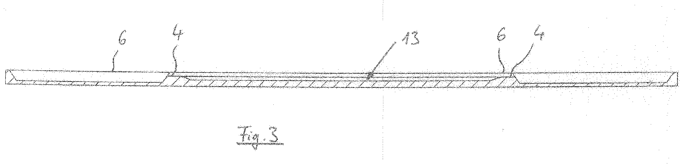

Der Ferkelfressbereich 1 weist in den Übergangsbereich 3 hineinlaufende Schultern 12 auf, die einerseits eine Stabilisierung des zentralen Ferkelfressbereiches darstellen und andererseits bei einer Befüllung des Futtertroges mit Flüssigfutter unterhalb der Oberfläche desselben verschwinden und somit für Ferkel, die noch keine Erfahrung mit Flüssigfutter haben, ein Herantasten an den tieferen Bereich 13 (vgl. Fig. 2 und 3) ermöglichen.

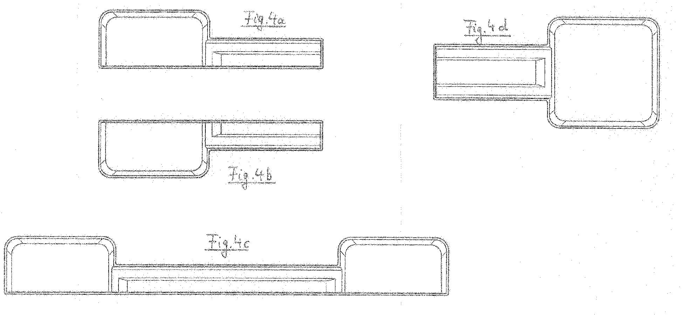

In den Fig. 4a bis 4d sind verschiedene Ausführungsformen des erfindungsgemäßen Futtertroges gezeigt. Im Wesentlichen entsprechen die Ausbildungen den einzelnen Teilbereichen, die in der Fig. 1 durch die Vierteilung des erfindungsgemäßen Futtertroges entstehen, wobei in den Abbildungen die Sensoren und auch ein etwaig vorhandener Zulauf nicht gezeigt sind. Die Fig. 4a entspricht erkennbar dem oberen linken Teil der Fig. 1, die Fig. 4b dem unteren linken Teil, die Fig. 4c der oberen Hälfte und die Fig. 4d der rechten Hälfte des Futtertroges gemäß Fig. 1.

Entsprechend können diese einzelnen Ausführungsvarianten der Erfindung in einer Abferkelbucht alleine (Fig. 4a und 4b) oder auch in zwei nebeneinanderliegenden Abferkelbuchten installiert werden (Fig. 4c und 4d), wobei das Futter bei den Varianten nach den Figuren 4c und 4d jeweils über ein einzelnes Zuführrohr zugeführt werden kann.

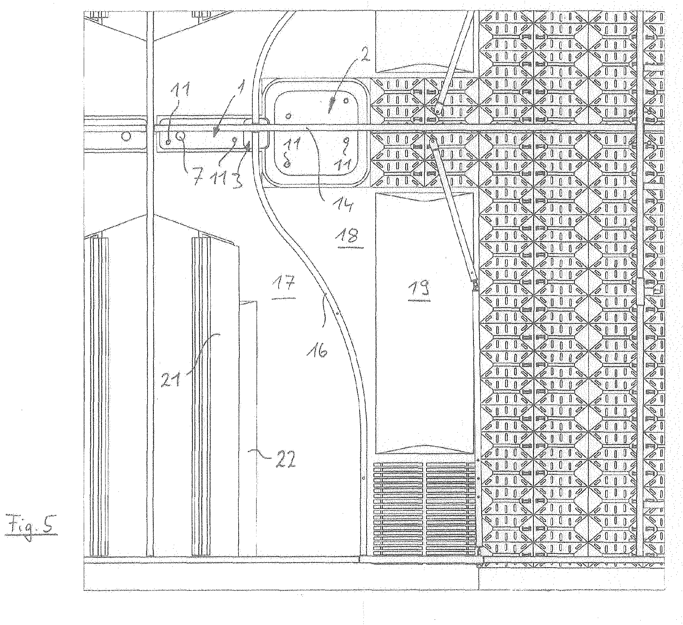

Ein in Anlehnung an den erfindungsgemäßen Futtertrog nach Fig. 4d ausgebildeter Futtertrog ist in dem Ausführungsbeispiel der Fig. 5 in zwei nebeneinanderliegenden Abferkelbuchten installiert, von denen nur die untere Bucht in der dargestellten Draufsicht komplett dargestellt ist. Der Futtertrog ist durch ein Gitter 14 in der Figurenebene in einen oberen Teil und einen unteren Teil getrennt. Entsprechend weist der Sauenfressbereich 2 in der Figurenebene oberhalb und unterhalb des Gitters 14 befindliche Teilfressbereiche für die Sauen auf. Gleiches gilt für den Ferkelfressbereich 1. Beide Bereiche werden über eine Zuführung 7 versorgt. Ungenutztes Futter, insbesondere Flüssigfutter, wird bei einer Zuführung von frischem Futter über den im Vergleich zum Ausführungsbeispiel nach Figuren 4d anders ausgebildeten Übergangsbereich 3 in den Sauenfressbereich 2 überführt.

Die Abferkelbucht ist durch eine Absperrung 16 in Form eines weiteren, vorliegend geschwungenen Trenngitters in einen links von der Absperrung 16 befindlichen Ferkelbereich 17 und einen Sauenbereich 18 getrennt. Im Sauenbereich 18 kann eine durch Wasser gekühlte Liegestelle 19 realisiert sein. Im Ferkelbereich 17 ist ein in der Draufsicht aufgrund einer Infrarotlampe 21 teilweise verdeckter, beheizter Liegebereich 22 vorhanden. Der Futtertrog befindet sich in beiden Bereichen 17 und 18, wobei die Absperrung 16 im Bereich des Übergangsbereichs 3 diesen überspannt.

Sauen und Ferkel können somit synchron fressen, wobei sich die Fressgeräusche der Sau stimulierend auf die Futteraufnahme der Ferkel auswirken. Ernährungsphysiologisch bestehen hinsichtlich des typischerweise sehr hochwertigen Laktationsfutters keine Bedenken, dieses den Ferkeln zur Anfütterung zuzuteilen. Nach dem Absetzen der Sau dient der Futtertrog den Ferkeln alleine zur Futteraufnahme. Während für die Zeitdauer der Säugephase eine Befüllung des Futtertroges aufgrund eines Signals der im Sauenfressbereich 2 angebrachten Sensoren 11 befüllt wird, wobei aufgrund des deutlich größeren Volumens des Sauenfressbereiches, das über die Zuführung 7 eingebrachte Futter den Ferkelfressbereich 1 regelmäßig von altem Futter reinigt, wird nach dem Entfernen der Sau aus der Abferkelbucht die Befüllung des Futtertroges für eine erste, insbesondere vorgehbare Zeitdauer aufgrund eines Signals zumindest das im Ferkelfressbereich angeordneten Sensors 11 erfolgen. Hierbei wird für die Befüllung eine für den Ferkelfressbereich 1 vorgegebene Menge Futter zugeführt. Diese Dosierung erfolgt insbesondere so, dass kein neues Futter in den Sauenfressbereich 2 überführt wird.

## Patentansprüche

1. Verfahren zur Fütterung von Ferkeln und/oder Sauen in einer Abferkelbucht, bei dem während der Säugephase eine Befüllung eines Futtertrogs aufgrund eines Signals zumindest eines in einem Sauenfressbereich (2) des Futtertroges angeordneten Sensors (11) erfolgt, insbesondere dergestalt, dass für die Sau eine ad libitum-Fütterung realisiert wird, wobei über eine Zuführung in einen Ferkelfressbereich (1) zugeführtes Futter etwaig noch im Ferkelfressbereich (1) vorhandenes Futter aus diesem Bereich ausschwemmt und in den Sauenfressbereich (2) überführt wird, wobei nach dem Entfernen der Sau aus der Abferkelbucht die Befüllung des Futtertrogs aufgrund eines Signals zumindest eines im Ferkelfressbereich (1) angeordneten Sensors (11) erfolgt.

2. Verfahren nach Anspruch 1, **dadurch gekennzeichnet, dass** zur Befüllung des Futtertrogs aufgrund des Signals eine vorgegebene Menge Futter zugeführt wird.

3. Verfahren nach Anspruch 1 oder 2, **dadurch gekennzeichnet, dass** für die Befüllung des Futtertrogs aufgrund des Signals des im Ferkelfressbereich (1) vorhandenen Sensors (11) eine für den Ferkelfressbereich (1) vorgegebene Menge Futter eindosiert wird, insbesondere dergestalt, dass kein neues Futter in den Sauenfressbereich (2) überführt wird.

4. Futtertrog für Sauen und deren Ferkel, -umfassend zumindest einen als Ferkelfressbereich (1) und zumindest einen als Sauenfressbereich (2) ausgebildeten Teil, wobei die beiden Teile über einen insbesondere als Schweller ausgebildeten Übergangsbereich (3), dessen Boden (4) unterhalb eines oberen Randes (6) des Futtertrogs angeordnet ist, dergestalt miteinander verbunden sind, dass aus einer Zuführung in den Ferkelfressbereich (1) eingebrachtes Futter in den Sauenfressbereich (2) gelangen kann, **dadurch gekennzeichnet, dass** sowohl dem Sauenfressbereich (2) als auch dem Ferkelfressbereich (1) jeweils zumindest ein Sensor (11) zur Füllstandserkennung zugeordnet und der jeweilige Sensor in diesem angeordnet ist, wobei der Futtertrog zur Durchführung des Verfahrens nach einem der Ansprüche 1-3 ausgebildet ist.

5. Futtertrog nach Anspruch 4, **dadurch gekennzeichnet, dass** die Sensoren (11) jeweils zur Erkennung eines minimalen Füllstands und/oder zur Erkennung eines Leerstands des Futtertrogs ausgebildet sind.

6. Futtertrog nach Anspruch 4 oder 5, **dadurch gekennzeichnet, dass** der Futtertrog zumindest zwei, jeweils endseitig an einen zentralen Ferkelfressbereich (1) angrenzende Sauenfressbereiche (2) aufweist, die jeweils über einen Übergangsbereich (3) mit dem Ferkelfressbereich (1) verbunden sind.

7. Futtertrog nach Anspruch 4 oder 5, **dadurch gekennzeichnet, dass** der entlang einer Längsmittelachse in einer Draufsicht insbesondere spiegelsymmetrisch ausgebildete Futtertrog durch eine Viertelung in je vier Sauen- und je vier Ferkelfressteilbereiche unterteilbar ist, die insbesondere über die zentrale Zuführung in den Ferkelfressbereich (1) versorgbar sind.

8. Futtertrog nach einem der Ansprüche 4 bis 7, **dadurch gekennzeichnet, dass** der Futtertrog eine über zumindest ein Kabel entfernt von dem Rest des Futtertrogs anordnungsbare Sensorschaltung aufweist.

9. Abferkelbucht mit einem Futtertrog nach einem der vorherigen Ansprüche 4 bis 8, **dadurch gekennzeichnet, dass** die Abferkelbucht durch eine Absperrung (16) in einen Sauenbereich (18) und einen Ferkelbereich (17) getrennt ist, wobei sich der Futtertrog in beiden Bereichen befindet.

10. Abferkelbucht nach Anspruch 9, **dadurch gekennzeichnet, dass** die Absperrung (16) im Bereich des Übergangsbereichs (3) an den Futtertrog heranragt oder diesen oberhalb des Übergangsbereichs (3) überspannt.

## Claims

1. Method for feeding piglets and/or sows in a farrowing pen, in which during the suckling phase, a feeding trough is filled on the basis of a signal of at least one sensor (11) arranged in a sow-feeding region (2) of the feeding trough, in particular such that the sow can feed as desired, feed that is supplied into a piglet-feeding region (1) via a supply line flushing any feed that is left in the piglet-feeding region (1) out of said region and transferring it to the sow-feeding region (2), the feeding trough being filled on the basis of a signal of at least one sensor (11) arranged in the piglet-feeding region (1) after the sow has been removed from the farrowing pen.

2. Method according to claim 1, **characterised in that** in order to fill the feeding trough, a predetermined amount of feed is supplied on the basis of the signal.

3. Method according to either claim 1 or claim 2, **characterised in that** for filling the feeding trough on the basis of the signal of the sensor (11) in the piglet-feeding region (1), an amount of feed that is predetermined for the piglet-feeding region (1) is metered in, in particular such that no new feed is transferred into the sow-feeding region (2).

4. Feeding trough for sows and their piglets, comprising at least one part designed as a piglet-feeding region (1) and at least one part designed as a sow-feeding region (2), the two parts being connected to one another via a transition region (3), in particular formed as a sill, the bottom (4) of which is arranged below an upper edge (6) of the feeding trough, in such a way that feed introduced from a supply line into the piglet-feeding region (1) can enter the sow-feeding region (2), **characterised in that** at least one sensor (11) for fill level detection is associated with both the sow-feeding region (2) and the piglet-feeding region (1) and in each case the sensor is arranged therein, the feeding trough being designed to carry out the method according to any of claims 1-3.

5. Feeding trough according to claim 4, **characterised in that** the sensors (11) are each designed to detect a minimum fill level and/or to detect whether the feeding trough is empty.

6. Feeding trough according to either claim 4 or claim 5, **characterised in that** the feeding trough has at least two sow-feeding regions (2), which are each adjacent to a central piglet-feeding region (1) at the ends thereof and are each connected to the piglet-feeding region (1) via a transition region (3).

7. Feeding trough according to either claim 4 or claim 5, **characterised in that** the feeding trough, which is in particular mirror-symmetrical along a longitudinal central axis in plan view, can be divided by being quartered into four sow-feeding portions and four piglet-feeding portions, which can be supplied into the piglet-feeding region (1) in particular via the central supply line.

8. Feeding trough according to any of claims 4 to 7, **characterised in that** the feeding trough has a sensor circuit that can be arranged remotely from the rest of the feeding trough via at least one cable.

9. Farrowing pen having a feeding trough according to any of the preceding claims 4 to 8, **characterised in that** the farrowing pen is divided by a barrier (16) into a sow region (18) and a piglet region (17), the feeding trough being located in both regions.

10. Farrowing pen according to claim 9, **characterised in that** in the region of the transition region (3), the barrier (16) projects towards the feeding trough or spans said trough above the transition region (3).

## Revendications

1. Procédé pour nourrir des porcelets et/ou des truies dans une loge de mise bas, dans lequel, pendant la phase d'allaitement, un remplissage d'une auge est effectué sur la base d'un signal d'au moins un capteur (11) disposé dans une zone d'alimentation des truies (2) de l'auge, en particulier de telle sorte qu'une alimentation à volonté soit réalisée pour la truie, dans lequel un apport de nourriture amenée dans une zone d'alimentation des porcelets (1) fait sortir la nourriture restant éventuellement dans la zone d'alimentation des porcelets (1) et la transfère dans la zone d'alimentation des truies (2), dans lequel, lorsque la truie a été retirée de la loge de mise bas, le remplissage de l'auge est effectué sur la base d'un signal d'au moins un capteur (11) disposé dans la zone d'alimentation des porcelets (1).

2. Procédé selon la revendication 1, **caractérisé en ce que** pour le remplissage de l'auge, une quantité de nourriture prédéfinie est amenée sur la base du signal.

3. Procédé selon la revendication 1 ou 2, **caractérisé en ce que** pour le remplissage de l'auge, une quantité de nourriture prédéfinie pour la zone d'alimentation des porcelets (1) est dosée sur la base du signal du capteur (11) existant dans la zone d'alimentation des porcelets (1), en particulier de telle sorte qu'aucune nourriture nouvelle ne soit transférée dans la zone d'alimentation des truies (2).

4. Auge pour des truies et leurs porcelets, comprenant une partie réalisée comme au moins une zone d'alimentation des porcelets (1) et comme au moins une zone d'alimentation des truies (2), dans laquelle les deux parties sont reliées ensemble par une zone de transition (3) réalisée en particulier sous la forme d'un rebord, le fond (4) de ladite zone étant disposé au-dessus d'un bord (6) supérieur de l'auge, de telle sorte que de la nourriture introduite dans la zone d'alimentation des porcelets (1) peut atteindre la zone d'alimentation des truies (2), **caractérisée en ce qu'**au moins un capteur (11) pour reconnaître le niveau de remplissage est attribué respectivement à la fois à la zone d'alimentation des truies (2) et à la zone d'alimentation des porcelets (1), et le capteur respectif y est disposé, l'auge étant réalisée pour effectuer les procédés selon l'une quelconque des revendications 1 à 3.

5. Auge selon la revendication 4, **caractérisée en ce que** les capteurs (11) sont réalisés respectivement pour reconnaître un niveau de remplissage minimal et/ou pour reconnaître un niveau de remplissage vide de l'auge.

6. Auge selon la revendication 4 ou 5, **caractérisée en ce que** l'auge présente au moins deux zones d'alimentation des truies (2) adjacentes respectivement d'un côté à une zone d'alimentation des porcelets (1) centrale et qui sont reliées à la zone d'alimentation des porcelets (1) respectivement par une zone de transition (3).

7. Auge selon la revendication 4 ou 5, **caractérisée en ce que** l'auge réalisée suivant un axe central longitudinal, en vue de dessus en particulier en symétrie spéculaire, peut par un partage en quatre être divisée respectivement en quatre zones d'alimentation des truies et quatre zones d'alimentation des porcelets qui peuvent être alimentées en particulier par une amenée centrale dans la zone d'alimentation des porcelets (1).

8. Auge selon l'une quelconque des revendications 4 à 7, **caractérisée en ce que** l'auge présente un circuit de capteur pouvant être disposé à distance du reste de l'auge en passant par au moins un câble.

9. Loge de mise bas avec une auge selon l'une quelconque des revendications précédentes 4 à 8, **caractérisée en ce que** la loge de mise bas est séparée par une barrière (16) en une zone pour les truies (18) et une zone pour les porcelets (17), l'auge se trouvant dans les deux zones.

10. Loge de mise bas selon la revendication 9, **caractérisée en ce que** la barrière (16) au niveau de la zone de transition (3) atteint l'auge ou enjambe celle-ci au-dessus de la zone de transition (3).
